(19) Europäisches Patentamt
European Patent Office
Office européen des brevets

(11) EP 3 201 269 B1

(12) **EUROPEAN PATENT SPECIFICATION**

(45) Date of publication and mention
of the grant of the patent:
**14.10.2020 Bulletin 2020/42**

(51) Int Cl.:
**C08L 23/10** (2006.01)      **C08L 23/12** (2006.01)
**C08F 2/00** (2006.01)

(21) Application number: **15846035.2**

(22) Date of filing: **04.08.2015**

(86) International application number:
**PCT/US2015/043562**

(87) International publication number:
**WO 2016/053467 (07.04.2016 Gazette 2016/14)**

(54) **BIMODAL POLYPROPYLENE COMPOSITIONS**

BIMODALE POLYPROPYLENZUSAMMENSETZUNGEN

COMPOSITIONS DE POLYPROPYLÈNE BIMODALES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2014 US 201462057526 P**
**25.11.2014 EP 14194812**

(43) Date of publication of application:
**09.08.2017 Bulletin 2017/32**

(73) Proprietor: **ExxonMobil Chemical Patents Inc.**
**Baytown TX 77520-2101 (US)**

(72) Inventors:
• **DATTA, Sudhin**
**Houston, TX 77007 (US)**
• **HULE, Rohan, A.**
**Houston, TX 77044 (US)**
• **CHEN, Xin**
**Shanghai 201315 (CN)**
• **LI, Feng**
**Katy, TX 77450 (US)**

(74) Representative: **ExxonMobil Chemical Europe Inc.**
**IP Law Europe**
**Hermeslaan 2**
**1831 Machelen (BE)**

(56) References cited:
EP-A1- 1 801 155        US-A1- 2005 182 198
US-A1- 2008 249 231     US-A1- 2011 118 370
US-A1- 2012 270 039     US-A1- 2012 295 994
US-A1- 2012 329 951     US-A1- 2013 123 431
US-B1- 6 350 828

**Description**

**FIELD OF THE INVENTION**

The present invention relates to polypropylene compositions that are bimodal, and in particular propylene-based polymers useful in impact resistant articles such as automotive components.

**BACKGROUND OF THE INVENTION**

Typically, to have a polypropylene with good processability, one chooses a relatively high Melt Flow Rate (MFR) polypropylene, such as one at 100 g/10 min. However, for strength that is useful in foaming or thermoforming applications, a polypropylene with lower MFR is better. What would be useful is a polypropylene composition that has the strength for foam and thermoforming applications, but is highly processable. The inventors set forth such a composition in the inventive bimodal polypropylene compositions.

Relevant publications include US 6,350,828; A. Elmoumni et al. in "Isotactic Poly(propylene) Crystallization: Role of Small Fractions of High or Low Molecular Weight Polymer" in 206 MACROMOL. CHEM. PHYS. 125-134 (2005); M. Seki et al. in "Shear-Mediated Crystallization of Isotactic Polypropylene: The Role of Long Chain-Long Chain Overlap," in 35 MACROMOLECULES 2583-2594 (2002); and W. Minoshima et al. in "Experimental Investigations of the Influence of Molecular Weight Distribution on the Rheological Properties of Polypropylene Melts" in 20(17) POLY. ENG. & SCI. 1166 (1980).

**SUMMARY OF THE INVENTION**

Disclosed is a polypropylene composition as described in claim 1. As used herein, the "subscript 2" in the DSC measured quantities refers throughout the text to the second melt in the DSC cycle.

Also disclosed is a method of melt extruding or co-producing propylene-based polymers to form a polypropylene composition according to the invention as described in claim 11.

**DESCRIPTION OF THE DRAWING**

**Figure** 1 is the shear viscosity as a function of shear rate for a 20 wt% mixture of the second iPP and a high molecular weight iPP;

**Figure 2** is the shear viscosity as a function of shear rate for a 40 wt% mixture of the second iPP and a high molecular weight iPP;

**Figure 3** is the shear viscosity as a function of MFR for both 20 and 40 wt% mixtures of the second iPP and the high molecular weight polypropylene (first iPP);

**Figures 4A** and **4B** are plots of data gathered for the Example 4 bimodal polypropylene compositions for Flexural Modulus as a function of Tm and PDI, respectively;

**Figure 5** is a plot of crystallization half-times ($T_{1/2}$) for single-site ("SS") unimodal isotactic polypropylene (iPP) and inventive bimodal polypropylene compositions, each at various MFRs; and

**Figure 6** is a plot of the shear viscosity of the reactor blend bimodal polypropylene composition and unimodal iPP.

**DETAILED DESCRIPTION OF THE INVENTION**

The inventors have found that a polymer blend of a high weight average molecular weight (HMW), preferably isotactic, narrow molecular weight distribution polypropylene having melting point temperature of greater than 150 °C (a "first" polypropylene), and a low weight average molecular weight (LMW), preferably isotactic, narrow molecular weight distribution polypropylene having a melting point temperature also greater than 150 °C (a "second" polypropylene), wherein the high molecular weight polymer and low molecular weight polymer are sufficiently miscible to impart a single glass transition temperature and a single melting point to the polymer blend, has improved processability and stiffness compared to a single narrow molecular weight distribution isotactic polypropylene of the average of the components. The invention further includes methods for preparing such polymer blends, and the product produced from the polymer blends, including blends with elastomers which should have improved impact strength, in addition to improved stiffness and processability.

By "single glass transition temperature" and a "single melting point to the polymer blend" what is meant is that there is a single maximum on the DSC generated curve that has no other discernable or deconvolutable peaks or shoulders.

More particularly, the invention includes a polypropylene composition, preferably bimodal as described herein, comprising at least two propylene-based polymers, comprising (or consisting essentially of) a first polypropylene (or HMW) having a weight average molecular weight (Mw) of greater than or equal to 150,000, or 160,000, or 170,000, or 180,000 g/mole, a MWD within the range from 2.5 to 5.5, and a $Tm_2$ of greater than 150°C; and a second polypropylene (or LMW) having a weight average molecular weight (Mw) of less than 150,000, or 140,000, or 130,000, or 120,000, or 110,000 g/mole, MWD within the range from 2.5 to 5.5, and a $Tm_2$ of greater than 150°C. The inventive bimodal compositions are produced such that the weight ratio of first polypropylene to the second polypropylene ("split") is within a range of from 95:5, preferably 90:10, or 85:15 wt% to 60:40, or 55:45, or 50:50 wt%; and the difference in the MFR (230°C/2.16kg) of the first polypropylene and the second polypropylene ("spread") is within a range of from 50 to 850 g/10 min. For example, a desirable spread might be 300 g/10 min, where the first polypropylene has an MFR of 15 g/10 min, and the second polypropylene has an MFR of 315 g/10 min. In any case, the split and the spread can be adjusted to allow for the best processability and balance of properties such as Flexural Modulus, depending on the desired application such as thermoforming, injection molding, or blow molding (each with or without foaming), and or films (less than 300 μm average thickness) and sheets (greater than or equal to 300 μm average thickness).

By "bimodal", what is meant is that there is a "spread" (or difference) in the melt flow rate (MFR) of the first and second polypropylenes by at least 10 or 20 g/10 min (or a difference in the Mw by at least 5,000 or 10,000 g/mole), which may be seen on a GPC plot as a typical bell-shaped curve with a "bump", or two distinct bell-shaped curves, and shapes therebetween.

## Polypropylene

A "propylene-based polymer" is a polymer or blend of polymers comprising at least 50 wt% propylene derived units, and includes homopolymers, copolymers, impact copolymers, and elastomeric copolymers. More particularly, the "polypropylene", both the "first" (HMW) and "second" (LMW) that is preferably used in the inventive polypropylene compositions is a homopolymer or copolymer comprising from 60 wt%, or 70 wt%, or 80 wt%, or 85 wt%, or 90 wt%, or 95 wt%, or 98 wt%, or 99 wt%, to 100 wt% propylene-derived units; comprising within the range of from 0 wt%, or 1 wt%, or 5 wt% to 10 wt%, or 15 wt%, or 20 wt%, or 30 wt%, or 40 wt% $C_2$ and/or $C_4$ to $C_{10}$ α-olefin derived units; and can be made by any desirable process using any desirable catalyst as is known in the art, such as a Ziegler-Natta catalyst, a metallocene catalyst, or other single-site catalyst, using solution, slurry, high pressure, or gas phase processes. Certain polypropylenes have within the range from 0.2 wt% or 0.5 wt% to 1 wt% or 2 wt% or 5 wt% ethylene-derived units. In any case, useful polypropylenes are preferably highly crystalline and have a DSC melting point temperature $T_{m2}$ (ASTM D3418) of at least 150°C, or 155°C, or 160°C, or 165°C, or within a range of from 130°C, or 135°C, or 140°C, or 150°C to 155°C, or 160°C, or 170°C.

Generally speaking, the crystallinity is a major influence on the heat of fusion and melting temperature. The term "crystalline," as used herein, characterizes those polymers which possess high degrees of inter- and intra-molecular order. Preferably, the polypropylene, most preferably the second polypropylene, has a heat of fusion ($\Delta H_{f2}$) greater than 60 J/g, or 70 J/g, or 80 J/g, as determined by DSC analysis, or within a range from 60, or 70 J/g to 110, or 120, or 135 J/g. The heat of fusion is dependent on the composition of the polypropylene; the thermal energy for the highest order of polypropylene is estimated at 189 J/g, that is, 100% crystallinity is equal to a heat of fusion of 189 J/g. In this regard, the polypropylenes useful in the inventive compositions, most preferably the second polypropylenes, may have a heat of crystallization $\Delta Hc_2$ within the range of from 80, or 85, or 90, or 100 J/g to 125, or 130, or 135 J/g; and a crystallization temperature Tc within the range of from 100, or 110, or 115, or 120 °C to 130, or 135, or 140, or 145 °C.

Due to the similar crystallinity of the first and second polypropylenes described herein, preferably, first and second polypropylenes have similar properties (within the claimed ranges) except for their molecular weights (weight and number average) and their melt flow rates. The first polypropylene has a melt flow rate ("MFR", 230°C, 2.16 kg, ASTM D1238) within the range from 10, or 18 g/10 min to 40, or 50, or 60, or 80, g/10 min, but the second polypropylene may have an MFR within the range from 50, or 60 g/10 min to 900, or 1000 g/10 min. The first polypropylene may have a minimum weight average Mw as described above, and a maximum weight average Mw of 300,000, or 350,000, or 400,000, or 450,000, or 500,000, or 600,000, or 700,000, or 800,000, or 900,000 g/mole. Also, the first and second polypropylenes may independently have molecular weight distributions (MWD, determined by GPC) of from 1.5, or 2.0, or 2.5, to 3.0, or 3.5, or 4.0, or 5.0, or 6.0, or 8.0 in certain embodiments.

The polypropylene component used in the practice of the invention can be prepared using any known process technology for the production of polypropylene, and/or any known catalyst technology. This includes the use of traditional Ziegler-Natta catalyst systems as well as metallocene catalyst systems. Suitable grades of polypropylene that are useful in the compositions described herein include those made by ExxonMobil, LyondellBasell, Total, Borealis, Japan Polypropylene, Mitsui, and other sources.

**Reactor and physical blends forming inventive bimodal composition**

The bimodal polypropylene compositions described herein can be a reactor blend in any embodiment. Described herein are reactor blend compositions (also referred to as "reactor blends") and processes (methods) for making reactor blends. The reactor blends include at least a first polypropylene and a second polypropylene, as discussed below. A preferred type of reactor blend is one that is formed in a series reactor (or "series reactors") which provide for consecutive or sequential polymerizations, although the term "reactor blend" itself also encompasses a blend formed in a single reactor, such as through the use of catalysts with multiple active sites.

Nevertheless, a "reactor blend" is herein distinguished from a "physical blend," the latter being the combination of two or more polymers that have already been formed and recovered before being mixed or otherwise combined, for example, separated (which would preferably also include being devolatilized) from some or all of the remaining polymerization mixture (e.g., unreacted monomers and/or solvent) and then combined together. On the other hand, in the case of series reactor processes, the reactor blend compositions are formed while polymerization is occurring, and such compositions can include different polymer components each of which can or may not represent totally different polymers having different properties (e.g., an isotactic ethylene-propylene polymer or polymer component blended with an atactic EPDM polymer or polymer component).

The term "reactor blend" does not preclude (except to the extent stated otherwise) two components that have reacted to some extent or degree with one another, for example, where one is a reaction product that is derived from the other, in whole or in part. Nor does the term "reactor blend" preclude two components that are mixed together but that can be separated by conventional means (e.g., fractionation) following formation and therefore can be identified as distinct polymers, e.g., a semicrystalline polymer having a distinct melting point (Tm) and an atactic or amorphous ethylene elastomer having either a low melting point (Tm) or no melting point.

The term "reactor blend" as used herein may in certain embodiments refer to a homogenous (e.g., a single phase) material while in other embodiments it may refer to a multiphase blend (e.g., two or more distinct phases). A blend formed by melt-blending is a physical blend. The reactor blend compositions preferably include at least two propylene polymers. In certain embodiments, the reactor blend includes a major portion by weight (more than 50 wt%) of a first polypropylene with a minor portion (less than 50 wt%) of a second polypropylene, while in other embodiments, the reactor blend includes a major portion by weight (more than 50 wt%) of a second polypropylene with a minor portion (less than 50 wt%) of a first polypropylene.

In certain embodiments of the reactor blend, the first polypropylene and second polypropylene form a substantially homogenous reactor blend, meaning that the first polypropylene and second polypropylene are part of, or are within, or occupy, the same phase. In other embodiments of the reactor blend, the first polypropylene and second polypropylene are blended with other polymers, especially ethylene copolymers or propylene-ethylene elastomers to form distinct phases of a multiphase composition where the first and second polypropylenes form the continuous phase and the ethylene copolymer or elastomer is the dispersed phase therein.

The reactor blends described herein may be formed in either batch or continuous "multistage polymerization," "meaning that two (or more) different polymerizations (or polymerization stages) are conducted. More specifically, a multistage polymerization may involve either two or more sequential polymerizations (also referred to herein as a "series process"), or two or more parallel polymerizations (also referred to herein as a "parallel process").

The polymers made in the respective reactors of the continuous, multiple reactor solution plant are blended when in solution without prior isolation from the solvent. The blends may be the result of series reactor operation, where the effluent of a first reactor enters a second reactor and where the effluent of the second reactor can be submitted to finishing steps involving devolatilization. The blend may also be the result of parallel reactor operation where the effluents of both reactors are combined and submitted to finishing steps. Either option provides an intimate admixture of the polymers in the devolatilized blend. Either case permits a wide variety of polysplits to be prepared whereby the proportion of the amounts of polymers produced in the respective reactors can be varied widely.

As noted above, the reactor blends described herein preferably include at least a first polypropylene, which is preferably the polymer formed by a first reaction (under conditions described elsewhere herein) and preferably in a "first reactor" as part of a series process or a parallel process, and a second polypropylene, which is preferably the polymer formed by a second reaction (under conditions described elsewhere herein) and preferably in a "second reactor" as part of a series process or a parallel process.

In a preferred embodiment, the bimodal polypropylene composition is formed by physical blending through melt extrusion. This method enables the use of visbreaking technology to form the second polypropylene (low MW) if desired. Such "visbreaking" technology is well known in the art and simply includes using a chemical bond-cleaving agent such as an organic peroxide to break down the carbon-carbon bonds of the polypropylene. In any case, thus, this method of melt extruding or otherwise co-producing a propylene-based polymer blend may comprise providing at least the first polypropylene, then combining the second polypropylene which may be previously or simultaneously visbroken in a manner that does not influence the molecular weight of the first polypropylene, and melt blending the composition to form a melt blend. Visbreaking technology has the advantage of narrowing the MWD of the treated polymer to a level, as described herein, that is similar to a polypropylene made using a single-site catalyst. In this method or even in a reactor blend, the weight ratio of first polypropylene to the second polypropylene ("split") is within a range of from 95:5 wt% to 50:50 wt%; and the difference in the MFR (230°C/2.16kg) of the first polypropylene and the second polypropylene ("spread") is within a range of from 50 to 850 g/10 min.

The method further includes changing the split, spread, or both to adjust the Shear Viscosity of the propylene-based polymer blend, where the Shear Viscosity at 10 sec$^{-1}$ decreases independently with an decreasing split, or decreasing spread, then isolating the bimodal polypropylene composition. Of course, in this method a composition that is at least bimodal in polypropylene is formed.

The method of melt blending or otherwise forming a reactor blend in any embodiment is characterized in that the Shear Viscosity of the melt blend at 10 sec$^{-1}$ decreases from within a range of from 350 to 250 Pa•s to within a range of from 100 to 200 Pa•s when the amount of second polypropylene combined is increased from a weight ratio of 80:20 wt% to 60:40 wt%. Also, the Shear Viscosity at 10 sec$^{-1}$ preferably decreases with a decreasing split but remains constant ($\pm$ 50 Pa•s) with changing MFR of the second polypropylene within a range of from 200 g/10 min to 900 g/10 min. In any case, the MFR (230°C/2.16kg) of the bimodal polypropylene composition is within a range of from 30 g/mole to 120 g/mole when no other major polymeric components are included.

In any case, the bimodal polypropylene compositions have several desirable properties. Preferably, the bimodal polypropylene compositions exhibit a Flexural Modulus (1%) within a range from 1500, or 1550, or 1600, or 1650 MPa to 1800, or 1850, or 1900, or 1950, or 2000 MPa; or a value greater than 1600, or 1650, or 1700 MPa. The bimodal polypropylene compositions preferably exhibit a Polydispersity Index (PDI) within a range from 5, or 5.5, or 6 to 7, or 7.5, or 8, or 8.5, or 9, or 9.5, or 10. The bimodal polypropylene compositions preferably exhibit a melting point temperature ($T_m$, °C) within a range from 150, or 151, or 152 °C to 155, or 156 or 157 °C.

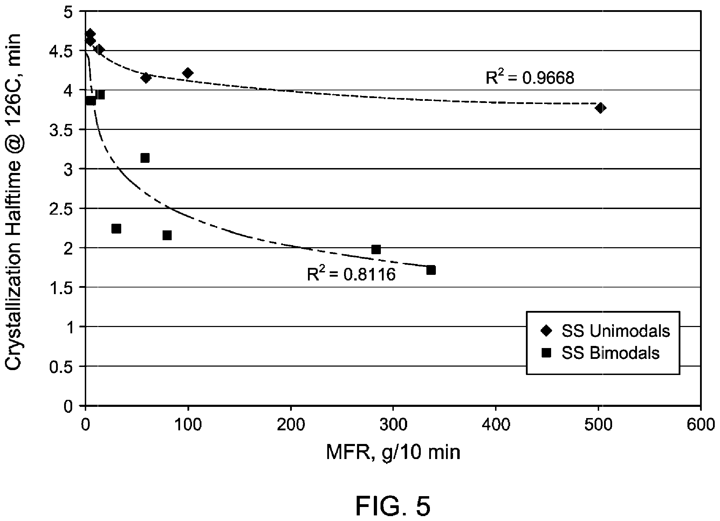

The bimodal polypropylene compositions preferably exhibit a crystallization half time within a range from 5 min (for bimodal compositions having an MFR of less than 2 g/10 min), to 1 min (for bimodal compositions having an MFR of greater than 300 g/10 min), the value leveling off at 1 min for bimodal compositions above 300 g/10 min. This is demonstrated for example in the examples as plotted in Figure 5, described further below. Another way of stating this is that the inventive bimodal polypropylene compositions have a crystallization half-time ($T_{1/2}$) of within a range from 0.5 to 1.5 min at an MFR of 300 g/min and above.

Not readily knowing the molecular weight characteristics of the individual polypropylene components of a blend, the deconvolution of the GPC data from bimodal polypropylene compositions and subsequent mathematical fitting can allow for calculation of individual molecular weights of the components. The molecular weight properties as characterized by GPC can be described by a log Normal function in which the probability density function (PDF) is shown in Equation 1:

$$f(M) = \frac{dWt}{d\log M} = \frac{1}{\sqrt{2\pi}\sigma} e^{-\frac{1}{2}\left(\frac{\log(M/M_p)}{\sigma}\right)^2}, \qquad (1)$$

where the peak width $\sigma$ and the peak molecular weight ($M_p$) are the parameters necessary for specific calculations. The weight averaged and number averaged molecular weights (Mw and Mn) can be derived from equation (1). The area under each peak corresponds to the mass fraction of each component. The Mw, and if desired, the Mn and Polydispersity Index (PDI) for each component is then calculated from the fitted Mp and $\sigma$ parameters in the corresponding peak with equations (2), (3) and (4). The curve fitting can be performed with software Igor Pro V6:

$$M_w = \frac{\int M dWt}{\int dWt} = \frac{\int M f d(\log M)}{\int f d(\log M)} = M_p e^{\frac{\ln^2 10}{2}\sigma^2} = M_p e^{2.651\sigma^2}, \qquad (2)$$

$$M_n = \frac{\int dWt}{\int \frac{dWt}{M}} = \frac{\int f d(\log M)}{\int \frac{f}{M} d(\log M)} = M_p e^{-\frac{\ln^2 10}{2}\sigma^2} = M_p e^{-2.651\sigma^2}, \qquad (3)$$

$$PDI = \frac{M_W}{M_n} = e^{\ln^2 10\sigma^2} = e^{5.302\sigma^2}$$

.                     (4)

Additives may by present in the compositions described herein and are preferably present, if at all, to an extent that does not negatively influence the impact or modulus of the composition or components made from the composition. By "consisting essentially of', what is meant is that the composition may include one or more additives as is known in the art as long as the claimed properties are not altered such that they fall outside the scope of those claimed properties; and by "consisting of' what is meant is that the compositions include additives to a level no greater than 1 wt% or 2 wt% or 3 wt% of the total weight of the composition, or alternatively, additives are not measurably present. The "additives" include fillers (especially, silica, glass fibers, talc, etc.) colorants, whitening agents, cavitation agents, antioxidants, anti-slip agents, antifogging agents, nucleating agents, and other additives common in compositions useful in automotive components.

Any embodiment may further include combining another polymeric component, such as an ethylene-propylene elastomer, ethylene-based plastomer, propylene-based elastomer, propylene-based impact copolymers, or combinations thereof, to within a range of from 5 or 10 wt% to 40 or 50 wt% based on the weight of the composition.

Various articles, foamed or non-foamed, can be made using or including the bimodal polypropylene compositions, and any useful technique can be used to make them, especially thermoforming, blow molding, and injection molding techniques. Automotive components can preferably be made from the inventive compositions, Examples of automotive articles that can be made from one or more of the compositions described above or elsewhere herein include exterior or interior car components. More specific embodiments of such automotive articles include bumper fascia, fender liners, wheel well covers, body side moldings, pillar trim, door trim panels, consoles, instrument panel end-caps, instrument panel trims, airbag covers, glove box bins, rear quarter panels, lift gate panels, seat back covers airbag components, airbags, instrument panel covers, dash board skins, air dams and headliner cartridges. These components can be made by any desirable method, but preferably made by injection molding. Thus, an aspect of the disclosure herein is to a method of injection molding an automotive component comprising the melt extrusion and injection into a mold the inventive thermoplastic polyolefin compositions.

The various descriptive elements and numerical ranges disclosed herein for the inventive compositions can be combined with other descriptive elements and numerical ranges to describe the invention(s); further, for a given element, any upper numerical limit can be combined with any lower numerical limit described herein, including the examples. The features of the invention are demonstrated in the following non-limiting examples.

## EXAMPLES

### Melt Flow Rate (MFR)

MFR is defined in grams of polymer per 10 min (g/10 min or its equivalent unit dg/min and was measured according to ASTM D1238 (2.16 kg, 230°C). For reactor granule and/or powder PP samples that are not stabilized, the following sample preparation procedure is followed before measuring the MFR. A solution of Butylated Hydroxy Toluene (BHT) in hexane is prepared by dissolving 40 $\pm$ 1 grams of BHT into 4000 $\pm$ 10 ml of Hexane. Weigh 10 $\pm$ 1 grams of the granule/powder PP sample into an aluminum weighing pan. Add 10 $\pm$ 1 ml of the BHT/Hexane solution into the aluminum pan under a Hood. Stir the sample, if necessary, to thoroughly wet all the granules. Place the sample slurry in a vacuum oven at 105° $\pm$ 5°C for a minimum of 20 min. Remove the sample from the oven and place in a nitrogen purged desiccator a minimum of 15 minutes allowing the sample to cool. Measure the MFR following ASTM D1238 procedure.

### Secant Flexural Modulus

The 1% secant Flexural Modulus was measured using ASTM D 790 A.

### Differential Scanning Calorimetry (DSC)

Peak crystallization temperature ($T_c$), peak melting temperature ($T_m$), crystallization half-times ($T_{1/2}$), heat of fusion ($\Delta H_f$) and second heat of fusion ($\Delta H_{f2}$) were measured via Differential Scanning Calorimetry (DSC) using a DSCQ200 (TA Instruments) unit. The DSC was calibrated for temperature using indium as a standard. The heat flow of indium (28.46 J/g) was used to calibrate the heat flow signal. A sample of 3 to 5 mg of polymer, typically in pellet or granule form, was sealed in a standard aluminum pan with flat lids and loaded into the instrument at room temperature (22°C). In the case of determination of $T_c$ and $T_m$, corresponding to 10°C/min cooling and heating rates, respectively, the following procedure was used. The sample was first equilibrated at 25°C and subsequently heated to 200°C using a heating rate of 10°C/min (first heat). The sample was held at 200°C for 5 min to erase any prior thermal and crystallization history. The sample was subsequently cooled down to 25°C with a constant cooling rate of 10°C/min (first cool). The sample was held isothermal at 25°C for 5 min before being heated to 200°C at a constant heating rate of 10°C/min (second heat). The exothermic peak of crystallization (first cool) was analyzed using the TA Universal Analysis software and the peak crystallization temperature ($T_c$) corresponding to 10°C/min cooling rate was determined. The endothermic peak of melting (second heat) was also analyzed using the TA Universal Analysis software and the peak melting temperature ($T_m$) corresponding to 10°C/min heating rate was determined. Unless otherwise indicated, reported values of $T_c$ and $T_m$ in this invention refer to a cooling and heating rate of 10°C/min, respectively.

**Gel Permeation Chromatography**

Polymer molecular weight (weight-average molecular weight, $M_w$, number-average molecular weight, $M_n$, and z-averaged molecular weight, $M_z$) and molecular weight distribution ($M_w/M_n$) are determined using Size-Exclusion Chromatography ("GPC"). Equipment consists of a High Temperature Size Exclusion Chromatograph (either from Waters Corporation or Polymer Laboratories), with a differential refractive index detector (DRI), an online light scattering detector, and a viscometer. Three Polymer Laboratories PLgel 10mm Mixed-B columns are used. The nominal flow rate is 0.5 cm$^3$/min and the nominal injection volume is 300 μL. The various transfer lines, columns and differential refractometer (the DRI detector) are contained in an oven maintained at 135°C. Solvent for the SEC experiment is prepared by dissolving 6 grams of butylated hydroxy toluene as an antioxidant in 4 liters of reagent grade 1,2,4-trichlorobenzene (TCB). The TCB mixture is then filtered through a 0.7 μm glass pre-filter and subsequently through a 0.1 μm Teflon filter. The TCB is then degassed with an online degasser before entering the SEC.

Polymer solutions are prepared by placing dry polymer in a glass container, adding the desired amount of TCB, then heating the mixture at 160°C with continuous agitation for about 2 hours. All quantities are measured gravimetrically. The TCB densities used to express the polymer concentration in mass/volume units are 1.463 g/ml at room temperature (22°C) and 1.324 g/ml at 135°C. The injection concentration can range from 1.0 to 2.0 mg/ml, with lower concentrations being used for higher molecular weight samples.

Prior to running each sample, the DRI detector and the injector are purged. Flow rate in the apparatus is then increased to 0.5 ml/minute, and the DRI allowed to stabilize for 8 to 9 hours before injecting the first sample. The LS laser is turned on 1 to 1.5 hours before running samples.

The thermoplastic olefin compounds of embodiments of the invention were formulated either in a 30-mm ZSK twin screw extruder.

Compounding in the twin screw extruder was accomplished using an intense mixing screw element. The batch size was 5000 gm. The temperature profile in the various extruder zones was ramped progressively from 170°C to 210°C. The compounds discharged from the extruder were pelletized.

Standard test specimens conforming to ASTM specifications were prepared through injection molding on a 300-ton Van Dorn press. The nozzle, front and rear temperatures of the injection molding equipment were maintained at 190°C. The mold temperature was kept constant at 27°C. The total cycle time was 54 seconds and the injection pressure was 4 MPa. A family mold containing various ASTM specimen cavities was used.

**Example 1. Formation of the Low MW iPP**

2000gm of HA840K, a Ziegler-Natta iPP made by Exxon Mobil Chemical was intimately mixed with Luperox 101 (2,5-Bis(*tert*-butylperoxy)-2,5-dimethylhexane, a peroxide visbreaking agent) as set forth in the tables below and extruded at 230°C in 16mm Twin screw extruder with a residence time of 90 seconds at the rate of 1500 gms per hour. The samples were characterized by DSC, GPC and MFR, the results of which are in Tables 1 and 2.

**Table 1.** Second (low molecular weight) iPP

| Example | 1-1 | 1-2 | 1-3 | 1-4 |
|---|---|---|---|---|
| iPP (gms) | 2000 | 2000 | 2000 | 2000 |
| Luperox 101 (g) | 4.07 | 5.76 | 7.89 | 10.41 |
| Measured MFR | 249 | 380 | 663 | 848 |
| **DSC** | | | | |
| $T_{m_2}$(°C) | 162.01 | 161.71 | 159.57 | 157.67 |

(continued)

| DSC | | | | |
|---|---|---|---|---|
| $\Delta Hf_2$ (J/g) | 105.20 | 111.90 | 112.40 | 109.90 |
| Tc (°C) | 126.16 | 126.92 | 126.10 | 123.39 |
| $\Delta Hc$ (J/g) | 115.80 | 113.40 | 116.10 | 115.60 |
| GPC | | | | |
| Mw | 96,350 | 72,005 | 70,763 | 60,046 |
| Mw/Mn | 3.45 | 4.00 | 2.90 | 2.27 |

**Table 2.** Second (low molecular weight) iPP

| Example | 1-5 | 1-6 | 1-7 | 1-8 |
|---|---|---|---|---|
| iPP (gms) | 2000 | 2000 | 2000 | 2000 |
| Luperox 101 (g) | 1.93 | 2.65 | 3 | 3.97 |
| Measured MFR | 70 | 101 | 133 | 190 |
| DSC | | | | |
| $Tm_2$ (°C) | 164.09 | 162.54 | 162.18 | 162.76 |
| $\Delta Hf_2$ (J/g) | 111.10 | 122.30 | 107.60 | 113.10 |
| Tc (°C) | 127.46 | 125.56 | 125.11 | 127.48 |
| $\Delta Hc$ (J/g) | 116.10 | 129.00 | 121.70 | 117.20 |
| GPC | | | | |
| Mw | 13,7364 | 112,616 | 117,167 | 97,054 |
| Mw/Mn | 3.9 | 5.02 | 3.48 | 3.85 |

**Example 2: Bimodal iPP By Blending**

Bimodal iPP was made by melt blending PP 3155 (a "high molecular weight" iPP), a 35 MFR iPP made by ExxonMobil with polymers made in example 1 using either 20 wt% or 40 wt% of the low molecular weight components. The PP3155 has a $T_m$ of 162°C, a $\Delta H_f$ of 87 J/g, and Tc of 117.5°C, and a $\Delta H_c$ of 73 J/g, and the weight average Mw is 163,050 g/mole. The results of these bimodal blends are in Tables 3 and 4.

**Table 3.** Example 2 bimodal compositions

| Example 2 | -1 | -2 | -3 | -4 | -5 | -6 | -7 | -8 |
|---|---|---|---|---|---|---|---|---|
| High MW (first) iPP | | | | | | | | |
| PP3155 | 800 | 800 | 800 | 800 | 800 | 800 | 800 | 800 |
| Low MW (second) iPP | | | | | | | | |
| 1-1 | 200 | | | | | | | |
| 1-2 | | 200 | | | | | | |
| 1-3 | | | 200 | | | | | |
| 1-4 | | | | 200 | | | | |
| 1-5 | | | | | 200 | | | |

(continued)

| | -1 | -2 | -3 | -4 | -5 | -6 | -7 | -8 |
|---|---|---|---|---|---|---|---|---|
| **Low MW (second) iPP** | | | | | | | | |
| 1-6 | | | | | | 200 | | |
| 1-7 | | | | | | | 200 | |
| 1-8 | | | | | | | | 200 |
| Irganox 1076 | 0.5 | 0.5 | 0.5 | 0.5 | 0.5 | 0.5 | 0.5 | 0.5 |
| Total Charge | 1000 | 1000 | 1000 | 1000 | 1000 | 1000 | 1000 | 1000 |
| **Example 2** | **-1** | **-2** | **-3** | **-4** | **-5** | **-6** | **-7** | **-8** |
| **DSC** | | | | | | | | |
| $Tm_2$ (°C) | 159.05 | 157.93 | 159.76 | 160.83 | 163.15 | 161.94 | 162.31 | 162.1 |
| $\Delta Hf_2$ (J/g) | 101 | 101.9 | 89.61 | 105.1 | 120.3 | 124.5 | 133.4 | 119.7 |
| Tc (°C) | 113.08 | 109.87 | 115.39 | 109.56 | 121.4 | 121.3 | 121.07 | 120.67 |
| $\Delta Hc$ (J/g) | 93.46 | 96.64 | 79.41 | 98.38 | 109.7 | 113.3 | 121.3 | 110.9 |
| **GPC** | | | | | | | | |
| Mw | 183,856 | 165,132 | 161,080 | 165,979 | 183,221 | 179,491 | 178,708 | 172,883 |
| Mw/Mn | 3.29 | 3.3 | 3.93 | 3.04 | 3.43 | 3.31 | 3.09 | 3.39 |
| MFR (2.16kg @ 230°C) mean value | 48 | 54 | 63 | 60 | 40 | 43 | 46 | 47 |
| shear stress, pa | 19,654 | 19,654 | 19,654 | 19,654 | 19,654 | 19,654 | 19,654 | 19,654 |
| shear rate, 1/s | 121.22 | 135.9 | 157.34 | 151.1 | 100 | 108.83 | 116.92 | 119.11 |
| viscosity, pas | 162.14 | 144.62 | 124.91 | 130.07 | 196.55 | 180.58 | 168 | 165.01 |
| **Example 2** | **-1** | **-2** | **-3** | **-4** | **-5** | **-6** | **-7** | **-8** |
| Extruder Speed rpm | 149 | 149 | 149 | 149 | 149 | 149 | 152 | 149 |
| Temp Profile °F | 306 | 307 | 307 | 305 | 302 | 305 | 299 | 305 |
| Zone 1 | 374 | 374 | 375 | 375 | 375 | 375 | 375 | 375 |
| Zone 2 | 384 | 384 | 385 | 385 | 385 | 384 | 386 | 385 |
| Zone 3 | 390 | 390 | 390 | 390 | 390 | 390 | 390 | 390 |
| Zone 4 | 390 | 390 | 390 | 389 | 388 | 390 | 390 | 390 |
| Zone 5 | 401 | 400 | 400 | 400 | 402 | 400 | 400 | 400 |
| Zone 6 | 410 | 410 | 410 | 410 | 408 | 410 | 410 | 410 |
| Feed Rate | 240 | 240 | 240 | 240 | 240 | 240 | 240 | 240 |
| Torque, % | 45 | 43 | 42 | 42 | 47 | 44 | 44 | 43 |
| Melt Temp, F | 431 | 433 | 431 | 432 | 433 | 428 | 431 | 429 |
| Melt Pressure, psi | 81 | 65 | 63 | 60 | 83 | 78 | 80 | 76 |

**Table 4.** Example 2 bimodal compositions

| Example 2 | -9 | -10 | -11 | -12 | -13 | -14 | -15 | -16 |
|---|---|---|---|---|---|---|---|---|
| **High MW iPP** | | | | | | | | |
| PP3155 | 600 | 600 | 600 | 600 | 600 | 600 | 600 | 600 |
| **Low MW iPP** | | | | | | | | |
| 1-1 | 400 | | | | | | | |
| 1-2 | | 400 | | | | | | |
| 1-3 | | | 400 | | | | | |
| 1-4 | | | | 400 | | | | |
| 1-5 | | | | | 400 | | | |
| 1-6 | | | | | | 400 | | |
| 1-7 | | | | | | | 400 | |
| 1-8 | | | | | | | | 400 |
| Irganox 1076 | 0.5 | 0.5 | 0.5 | 0.5 | 0.5 | 0.5 | 0.5 | 0.5 |
| Total Charge | 1000 | 1000 | 1000 | 1000 | 1000 | 1000 | 1000 | 1000 |
| **Example 2** | **-9** | **-10** | **-11** | **-12** | **-13** | **-14** | **-15** | **-16** |
| **DSC** | | | | | | | | |
| $Tm_2$(°C) | 158.43 | 157.96 | 160.03 | 157.15 | 162.87 | 161.97 | 162.07 | 162.85 |
| $\Delta Hf_2$ (J/g) | 119.7 | 113.5 | 114 | 119.8 | 108.7 | 119.1 | 121.6 | 113.1 |
| Tc (°C) | 111.14 | 110.81 | 115.55 | 109.75 | 122.24 | 122.78 | 122.11 | 122.05 |
| $\Delta Hc$ (J/g) | 110.9 | 101.8 | 103.7 | 100.5 | 98.44 | 110.2 | 109.6 | 104.8 |
| GPC | | | | | | | | |
| Mw | 157,790 | 147,264 | 148,705 | 142,016 | 171,636 | 158,593 | 154,545 | 157,124 |
| Mw/Mn | 3.02 | 3.44 | 3.76 | 3.28 | 3.3 | 3.1 | 3.28 | 3.43 |
| MFR (2.16kg @ 230°C) mean value | 71 | 86 | 106 | 117 | 42 | 51 | 53 | 60 |
| shear stress, pa | 19,654 | 19,654 | 196,538 | 196,538 | 19,654 | 19,654 | 19,654 | 19,654 |
| shear rate, 1/s | 178.26 | 216.95 | 269.66 | 296.94 | 1047.6 | 128.14 | 133.78 | 151.11 |
| viscosity, pas | 110.25 | 90.59 | 728.83 | 661.88 | 187.88 | 153.38 | 146.92 | 130.66 |
| **Example 2** | **-9** | **-10** | **-11** | **-12** | **-13** | **-14** | **-15** | **-16** |
| Extruder Speed rpm | 152 | 152 | 152 | 152 | 152 | 152 | 152 | 152 |
| Temp Profile °F | 306 | 305 | 307 | 308 | 305 | 305 | 305 | 304 |
| Zone 1 | 375 | 375 | 375 | 375 | 375 | 375 | 375 | 375 |
| Zone 2 | 385 | 385 | 385 | 385 | 385 | 384 | 384 | 384 |
| Zone 3 | 390 | 390 | 390 | 390 | 390 | 390 | 390 | 390 |
| Zone 4 | 390 | 390 | 389 | 390 | 390 | 390 | 390 | 390 |
| Zone 5 | 400 | 400 | 400 | 400 | 400 | 400 | 400 | 400 |
| Zone 6 | 410 | 410 | 410 | 410 | 410 | 410 | 410 | 410 |
| Feed Rate | 240 | 240 | 240 | 240 | 240 | 240 | 240 | 240 |

(continued)

| Example 2 | -9 | -10 | -11 | -12 | -13 | -14 | -15 | -16 |
|---|---|---|---|---|---|---|---|---|
| Torque, % | 41 | 40 | 41 | 40 | 46 | 45 | 41 | 40 |
| Melt Temp, F | 431 | 436 | 432 | 431 | 430 | 431 | 430 | 430 |
| Melt Pressure, psi | 50 | 40 | 36 | 28 | 75 | 70 | 60 | 51 |

**Example 3:** Capillary rheology of the Polymers in Example 2 were conducted on an ARC 2 rheometer at 200°C using a 1 mm die with a path length of 30 mm. The Rabinowitsch corrected data is shown here. A "Rabinowitsch Correction" is well known in the art and is a correction applied to the viscosity data obtained from a capillary rheometer to allow for the non-Newtonian character of the polymeric fluid (See B. Rabinowitsch in 145A Z. PHYSIK. CHEM. 1 (1929)). In particular, capillary rheology of the polymers was conducted on an ARC 2 rheometer at 190°C using a 1 mm die with a path length of 30 mm. The test conditions were reproduced according to ASTM D3835, Standard Test Method for Determination of Properties of Polymeric Materials by Means of a Capillary Rheometer. The Rabinowitch corrected (R-C) shear viscosity data is shown here.

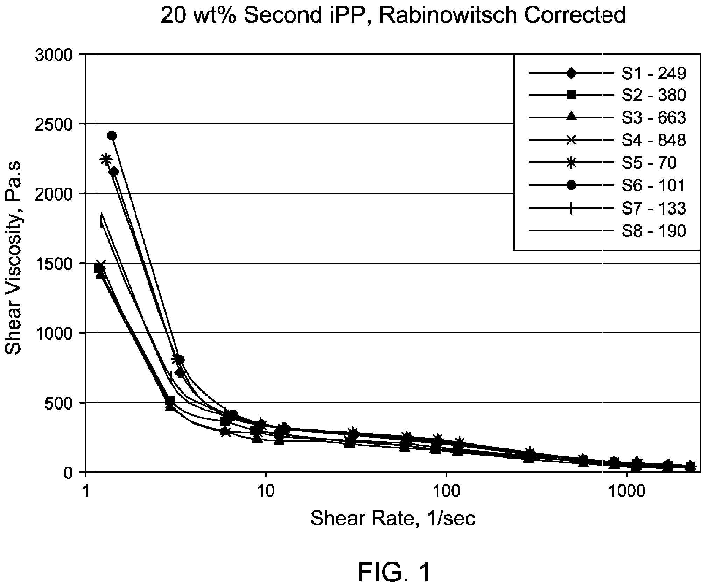

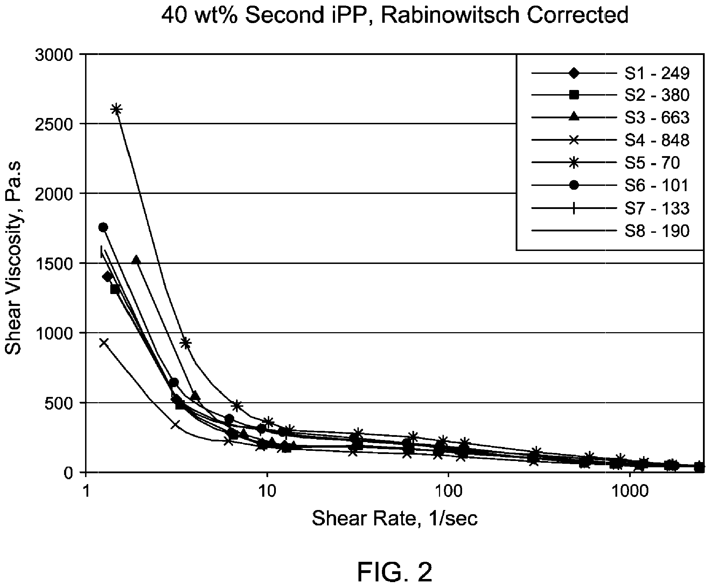

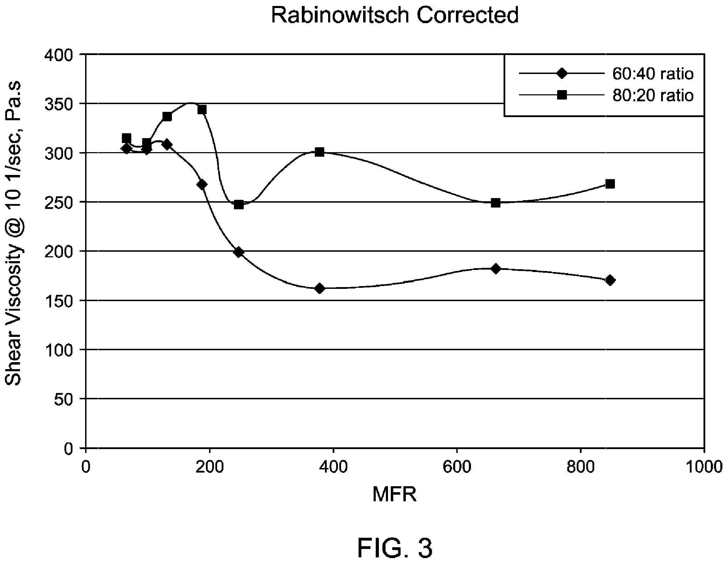

Figures 1 and 2 are a graphical representation of the shear viscosity data in these Tables 5 to 8, referring to the "S" or "Sample" number and the measured MFR in g/10 min shown in Tables 1 and 2. Figure 3 is the comparison, where "S" means "shear" numbered for each example, as well as in Tables 5 to 8, with the measured MFR's in g/10 min.

**Table 5.** Capillary rheology (shear viscosity in Pa•s) of Example 2 bimodal compositions

| Sample 1 | | Sample 2 | | Sample 3 | | Sample 4 | |
|---|---|---|---|---|---|---|---|
| S1, Rate | S1 - 249 | S2, Rate | S2 - 380 | S3, Rate | S3 - 663 | S4, Rate | S4 - 848 |
| 1.44 | 2164.8 | 1.185 | 1471.3 | 1.23 | 1437.2 | 1.22 | 1512.75 |
| 3.4 | 727.6 | 2.94 | 539.9 | 3.01 | 494.95 | 2.99 | 503.7 |
| 6.56 | 370.35 | 5.87 | 363.95 | 5.97 | 294.8 | 5.95 | 303.05 |
| 9.67 | 270 | 8.79 | 313.7 | 8.9 | 244.85 | 8.89 | 301.45 |
| 12.72 | 247.05 | 11.71 | 301.4 | 11.83 | 251.5 | 11.82 | 269.2 |
| 30.65 | 237.85 | 29.17 | 248.3 | 29.22 | 222.75 | 29.31 | 233.35 |
| 59.83 | 219.35 | 58.21 | 218.4 | 57.98 | 195.85 | 58.29 | 202.65 |
| 88.6 | 197.8 | 87.23 | 193.6 | 86.60 | 177.5 | 87.18 | 182.25 |
| 117.09 | 184.3 | 116.21 | 175.45 | 115.10 | 163 | 115.98 | 166 |
| 285.2 | 131.2 | 289.74 | 123.45 | 284.97 | 112.9 | 287.92 | 116.45 |
| 560.39 | 95.25 | 578.38 | 88.2 | 565.95 | 82.9 | 572.91 | 83.9 |
| 832.5 | 76.8 | 866.64 | 70.5 | 845.54 | 68.1 | 856.85 | 67 |
| 1102.72 | 65.15 | 1154.64 | 59.9 | 1124.24 | 58.25 | 1140.12 | 57.15 |
| 1639.42 | 51 | 1730.15 | 46.8 | 1679.87 | 45.85 | 1705.31 | 44.95 |
| 2172.67 | 42.5 | 2305.17 | 38.8 | 2233.8 | 38.3 | 2269.19 | 37.75 |

**Table 6.** Capillary rheology (shear viscosity in Pa•s) of Example 2 bimodal compositions

| Sample 5 | | | Sample 6 | Sample 7 | | Sample 8 | |
|---|---|---|---|---|---|---|---|
| S5, Rate | S5 - 70 | S6, Rate | S6 - 101 | S7, Rate | S7 - 133 | S8, Rate | S8 - 190 |
| 1.30 | 2265.5 | 1.38 | 2429.55 | 1.21 | 1817.15 | 1.2 | 1882.8 |
| 3.16 | 838.25 | 3.32 | 818.15 | 2.99 | 685.85 | 2.975 | 630.45 |
| 6.24 | 448.6 | 6.475 | 437.85 | 5.96 | 426.95 | 5.94 | 421.95 |

(continued)

| Sample 5 | | | Sample 6 | Sample 7 | | Sample 8 | |
|---|---|---|---|---|---|---|---|
| S5, Rate | S5 - 70 | S6, Rate | S6 - 101 | S7, Rate | S7 - 133 | S8, Rate | S8 - 190 |
| 9.28 | 354.25 | 9.59 | 345.05 | 8.93 | 357.55 | 8.90 | 366.1 |
| 12.31 | 314.05 | 12.67 | 309.8 | 11.89 | 337.5 | 11.85 | 344.8 |
| 30.5 | 293.15 | 30.82 | 279.6 | 29.59 | 288.15 | 29.52 | 295.8 |
| 59.79 | 260.65 | 60.53 | 244.85 | 59.03 | 248.2 | 58.91 | 250 |
| 89.13 | 231.35 | 89.91 | 219.35 | 88.43 | 219.95 | 88.28 | 219.45 |
| 118.3 | 212.55 | 119.05 | 198.8 | 117.78 | 198.05 | 117.6 | 201 |
| 291.70 | 146.4 | 291.52 | 136.75 | 293.46 | 134.45 | 293.21 | 136.25 |
| 577.69 | 102.55 | 574.71 | 97 | 585.49 | 94.7 | 585.27 | 95.25 |
| 861.73 | 80.95 | 855.2 | 77.85 | 876.99 | 75.2 | 876.91 | 76 |
| 1144.56 | 67.9 | 1134.04 | 65.6 | 1168.15 | 63.35 | 1168.28 | 64 |
| 1707.74 | 52.45 | 1688.36 | 50.8 | 1749.78 | 48.85 | 1750.47 | 49.4 |
| 2268.61 | 43.45 | 2239.58 | 42.35 | 2330.73 | 40.45 | 2332.13 | 40.95 |

**Table 7.** Capillary rheology (shear viscosity in Pa•s) of Example 2 bimodal compositions

| Sample 9 | | Sample 10 | | Sample 11 | | Sample 12 | |
|---|---|---|---|---|---|---|---|
| S1, Rate | S1 - 249 | S2, Rate | S2 - 380 | S3, Rate | S3 - 663 | S4, Rate | S4 - 848 |
| 1.33 | 1400.75 | 1.445 | 1315.15 | 1.87 | 1530.6 | 1.26 | 927.3 |
| 3.20 | 512.75 | 3.38 | 485.2 | 3.95 | 558.55 | 3.06 | 339.65 |
| 6.23 | 272.5 | 6.50 | 240.1 | 7.24 | 282.65 | 6.02 | 214.35 |
| 9.22 | 197.75 | 9.53 | 181.3 | 10.43 | 200.85 | 8.94 | 180.55 |
| 12.19 | 200.2 | 12.53 | 164.25 | 13.55 | 182.3 | 11.86 | 171.4 |
| 29.64 | 186.6 | 30.06 | 158.75 | 31.61 | 167.05 | 29.08 | 145.85 |
| 58.21 | 171.85 | 58.55 | 151.3 | 60.65 | 153.25 | 57.43 | 131.15 |
| 86.47 | 156.45 | 86.61 | 137.1 | 89.08 | 140.5 | 85.56 | 119.5 |
| 114.5 | 146.95 | 114.38 | 128.4 | 117.13 | 128.2 | 113.52 | 110.95 |
| 280.49 | 107.75 | 278.16 | 96.4 | 281.64 | 96.1 | 279.59 | 83.5 |
| 553.125 | 79.9 | 546.08 | 72.7 | 549.35 | 72.25 | 553.33 | 63.6 |
| 823.25 | 65.65 | 810.92 | 60.6 | 813.19 | 59.8 | 825.10 | 52.7 |
| 1091.82 | 56.65 | 1073.87 | 52.35 | 1074.73 | 51.75 | 1095.65 | 45.8 |
| 1625.86 | 45 | 1596.09 | 42.35 | 1593.31 | 41.7 | 1634.30 | 37.05 |
| 2157.02 | 37.95 | 2114.89 | 36 | 2107.80 | 35.5 | 2170.64 | 31.6 |

**Table 8.** Capillary rheology (shear viscosity in Pa•s) of Example 2 bimodal compositions

| Sample 13 | | Sample 14 | | Sample 15 | Sample 16 | | |
|---|---|---|---|---|---|---|---|
| S5, Rate | S5 - 70 | S6, Rate | S6 - 101 | S7, Rate | S7 - 133 | S8, Rate | S8 - 190 |
| 1.47 | 2612.1 | 1.24 | 1762.15 | 1.2 | 1584.85 | 1.27 | 1608.2 |

(continued)

| Sample 13 | | Sample 14 | | Sample 15 Sample 16 | | | |
|---|---|---|---|---|---|---|---|
| S5, Rate | S5 - 70 | S6, Rate | S6 - 101 | S7, Rate | S7 - 133 | S8, Rate | S8 - 190 |
| 3.47 | 936.35 | 3.045 | 642.55 | 2.98 | 580 | 3.10 | 535.15 |
| 6.71 | 473.2 | 6.045 | 388.3 | 5.94 | 358.35 | 6.11 | 331.35 |
| 9.88 | 356.3 | 9.03 | 320.1 | 8.89 | 333.7 | 9.10 | 312.15 |
| 13.015 | 304.45 | 12.01 | 303.75 | 11.83 | 308.3 | 12.07 | 269.85 |
| 31.395 | 285.1 | 29.71 | 263.05 | 29.41 | 259.35 | 29.7 | 229.5 |
| 61.32 | 249.2 | 59.02 | 226.7 | 58.62 | 218.15 | 58.78 | 197.75 |
| 90.83 | 222 | 88.2 | 201.2 | 87.77 | 194.75 | 87.67 | 175 |
| 120.05 | 203.75 | 117.27 | 184.2 | 116.85 | 177.8 | 116.4 | 162.1 |
| 292.49 | 139.2 | 290.65 | 126.6 | 290.81 | 122.15 | 287.33 | 116.05 |
| 574.76 | 98.15 | 577.69 | 90.35 | 579.71 | 87.65 | 569.45 | 84.6 |
| 853.84 | 78.75 | 863.445 | 72.7 | 867.91 | 70.6 | 849.78 | 68.65 |
| 1130.96 | 66.35 | 1148.39 | 61.4 | 1155.65 | 59.8 | 1129.00 | 58.3 |
| 1681.33 | 51.65 | 1716.62 | 47.8 | 1730.23 | 46.65 | 1685.17 | 46.05 |
| 2228.11 | 42.95 | 2283.28 | 39.7 | 2303.93 | 38.65 | 2239.21 | 38.7 |

**Example 4. Demonstrate single-site bimodal composition.**

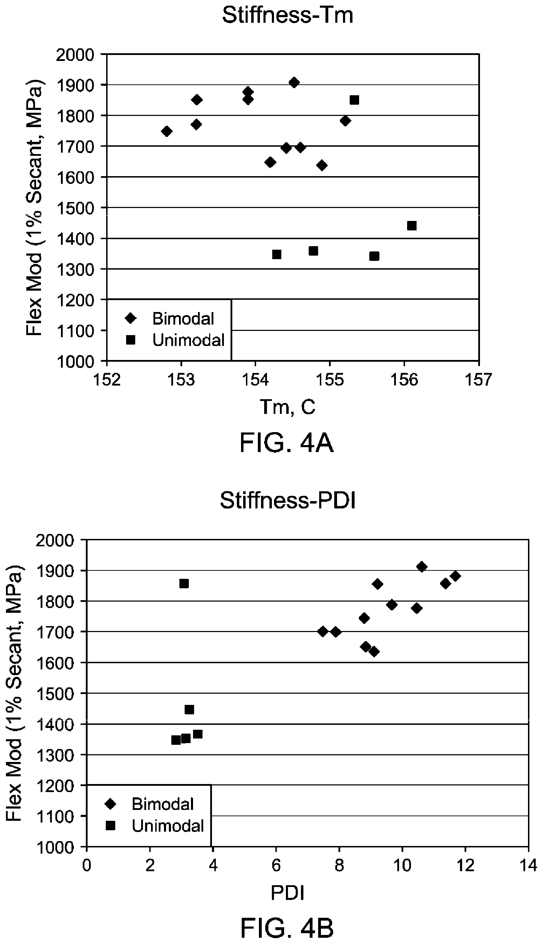

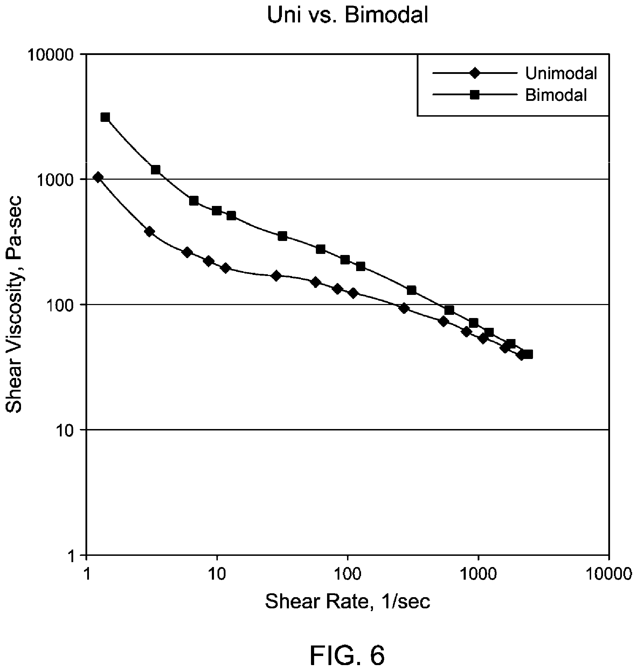

In this example, metallocene catalysts were used to homopolymerize propylene, and form reactor blends. In Table 9 below are the results of the blends (showing amounts weight percent), measuring the MFR (ASTM D 1238, Condition L (230° C), at 2.16 kg) of each of the first (high molecular weight iPP, or "HMW") and second (low molecular weight or "LMW") polypropylenes, the melting temperatures (Tm), PDI, the crystallization half time ($T_{1/2}$) and 1% secant Flexural Modulus (ASTM D 790 A). The comparative unimodal iPPs are metallocene made polypropylenes having MFRs in the same range as the inventive bimodal compositions (combined MFR of high and low MFR iPPs). The Flexural Modulus data is plotted as a function of Tm and PDI in Figures 4A and 4B. Figure 5 is a plot of the crystallization half times for single-site ("SS") unimodal iPP and bimodal iPP compositions. Figure 6 is a plot of the shear viscosity of the unimodal iPP and bimodal iPP compositions. The data in Table 9 are estimates from these graphs.

**Table 9. Example 4 Results, reactor blends, approximate wt% values of HMW and LMW iPP**

| MFR (and sample #) | 4-1 | 4-2 | 4-3 | 4-4 | 4-5 | 4-6 | 4-7 | 4-8 | 4-9 | Unimodal iPP comparative |
|---|---|---|---|---|---|---|---|---|---|---|
| 2.4 g/10 min (HMW) | 90 | 50 | 10 | 90 | 50 | 10 | - | - | - | |
| 9.2 g/10 min (HMW) | - | - | - | - | - | - | 90 | 50 | 10 | |
| 528 g/10 min (LMW) | - | - | - | 10 | 50 | 90 | 10 | 50 | 90 | |
| 100 g/10 min (LMW) | 10 | 50 | 90 | - | - | - | - | - | - | |
| Blend MFR | 1.9 | 13.7 | 78 | 2.6 | 28.4 | 336 | 12.3 | 56 | 282 | |
| $T_{1/2}$ (min) @ 126 °C | 4.6 | 3.8 | 2.1 | 3.8 | 2.2 | 1.5 | 3.9 | 3.1 | 2 | 4-4.5 |
| $T_m$ (°C) | 153 | 155 | 154 | 153 | 154 | 155 | 154 | 154 | 154 | 154-156 |
| PDI | 12 | 8 | 9 | 10 | 11 | 12 | 8 | 10 | 9 | 2-4 |

(continued)

| MFR (and sample #) | 4-1 | 4-2 | 4-3 | 4-4 | 4-5 | 4-6 | 4-7 | 4-8 | 4-9 | Unimodal iPP comparative |
|---|---|---|---|---|---|---|---|---|---|---|
| Flex Mod (MPa) | 1900 | 1800 | 1600 | 1850 | 1750 | 1700 | 1850 | 1700 | 1650 | 1300-1450 |

Also disclosed is the use of the polypropylene compositions according to the invention in an automotive component; or the use of the polypropylene compositions in a composition with fillers and/or other polymeric component.

**Claims**

1.  A polypropylene composition comprising at least two propylene-based polymers, comprising:

    a first polypropylene having a weight average molecular weight (Mw) of greater than or equal to 150,000 g/mole, a MWD within the range from 2.5 to 5.5, and a melting point temperature $Tm_2$ of greater than 150°C; and
    a second polypropylene having a weight average molecular weight (Mw) of less than 150,000 g/mole, a MWD within the range from 2.5 to 5.5, and a $Tm_2$ of greater than 150°C, wherein
    the weight ratio of first polypropylene to the second polypropylene ("split") is within a range of from 95:5 wt% to 50:50 wt%,
    the difference in the MFR (230°C/2.16kg) of the first polypropylene and the second polypropylene ("spread") is within a range of from 50 to 850 g/10 min, and
    the first polypropylene and second polypropylene are sufficiently miscible to impart a single glass transition temperature and a single melting point to the polymer blend.

2.  The polypropylene composition of claim 1, wherein the second polypropylene has a heat of fusion (second melt) $\Delta H_{f2}$ value within the range of from 80 J/g to 135 J/g.

3.  The polypropylene composition of claims 1 or 2, wherein the second polypropylene has a crystallization temperature Tc within the range of from 100°C to 145°C.

4.  The polypropylene composition of any one of the previous claims, wherein the second polypropylene has a heat of crystallization $\Delta Hc$ within the range of from 80 J/g to 135 J/g.

5.  The polypropylene composition of any one of the previous claims, wherein the second polypropylene has a MFR (230°C/2.16 kg) within a range of from 50 g/10 min to 1000 g/10 min.

6.  The polypropylene composition of any one of the previous claims, having a Flexural Modulus (ASTM D 790 A) of greater than 1600 MPa.

7.  The polypropylene composition of any one of the previous claims, having a crystallization half-time ($T_{1/2}$) of within a range from 0.5 to 1.5 min at an MFR of 300 g/min and above.

8.  The polypropylene composition of any one of the previous claims, further comprising another polymeric component selected from the group consisting of ethylene-propylene elastomer, ethylene-based plastomer, propylene-based elastomer, propylene-based impact copolymers, and combinations thereof.

9.  An automotive component comprising the polypropylene composition of any one of the previous claims.

10. A thermoformed, injection molded, or blow molded component, foamed or non-foamed, comprising the polypropylene composition of any one of the previous claims.

11. Method of melt extruding or co-producing propylene-based polymers to form the polypropylene composition of any one of the previous claims comprising:

    (a) providing at least a first polypropylene having an MFR (230°C/2.16kg) within a range of from 0.10 to 50 g/10 min;

(b) combining a second polypropylene having an MFR (230°C/2.16kg) within a range of from 50 to 1000 g/10 min with at least the first polypropylene and melt blending the composition to form a melt blend;

i. wherein the weight ratio of first polypropylene to the second polypropylene ("split") is within a range of from 95:5 wt% to 50:50 wt%; and

ii. wherein the difference in the MFR (230°C/2.16kg) of the first polypropylene and the second polypropylene ("spread") is within a range of from 50 to 850 g/10 min;

(c) changing the split, spread, or both to adjust the Shear Viscosity of the first and second polypropylene in the melt, where the Shear Viscosity at 10 sec$^{-1}$ decreases independently with a decreasing split or decreasing spread; and

(d) isolating the polypropylene composition.

12. The method of claim 11, **characterized in that** the Shear Viscosity of the melt blend at 10 sec$^{-1}$ decreases from within a range of from 350 to 250 Pa•s to within a range of from 100 to 200 Pa•s when the amount of second polypropylene combined is increased from a weight ratio of 80:20 wt% to 60:40 wt%.

13. The method of claim 11, wherein the MFR (230°C/2.16kg) of the polypropylene composition is within a range of from 30 g/10 min to 120 g/10 min.

14. The method of claim 11, further comprising thermoforming, injection molding, or blow molding the polypropylene composition to form articles.

15. The method of claim 14, further comprising foaming the polypropylene composition to form foamed articles.

**Patentansprüche**

1. Polypropylenzusammensetzung, die mindestens zwei Polymere auf Propylenbasis umfasst, die
erstes Polypropylen mit einem durchschnittlichen Molekulargewicht (Gewichtsmittel) (Mw) größer als oder gleich 150 000 g/Mol, einer MWD (Molekulargewichts-Verteilung) im Bereich von 2,5 bis 5,5 und einer Schmelzpunkttemperatur $Tm_2$ höher als 150°C und
zweites Polypropylen mit einem durchschnittlichen Molekulargewicht (Gewichtsmittel) (Mw) kleiner als 150 000 g/Mol, einer MWD im Bereich von 2,5 bis 5,5 und einer Schmelzpunkttemperatur $Tm_2$ höher als 150°C umfassen, wobei das Gewichtsverhältnis von erstem Polypropylen zu dem zweiten Polypropylen ("Aufteilung") in einem Bereich von 95:5 Gew.% bis 50:50 Gew.% liegt,
der Unterschied in der MFR (230°C/2,16 kg) des ersten Polypropylens und des zweiten Polypropylens ("Spanne") innerhalb eines Bereichs von 50 bis 850 g/10 min liegt, und
das erste Polypropylen und das zweite Polypropylen ausreichend mischbar sind, um dem Polymergemisch eine einzige Glasübergangstemperatur und einen einzigen Schmelzpunkt zu verleihen.

2. Polypropylenzusammensetzung nach Anspruch 1, bei der das zweite Polypropylen einen Wert der Schmelzwärme (zweites Schmelzen) $\Delta H_{f2}$ innerhalb des Bereichs von 80 J/g bis 135 J/g aufweist.

3. Polypropylenzusammensetzung nach den Ansprüchen 1 oder 2, bei der das zweite Polypropylen eine Kristallisationstemperatur $T_c$ innerhalb des Bereichs von 100°C bis 145°C aufweist.

4. Polypropylenzusammensetzung nach einem der vorhergehenden Ansprüche, bei der das zweite Polypropylen eine Kristallisationswärme $\Delta H_c$ innerhalb des Bereichs von 80 J/g bis 135 J/g aufweist.

5. Polypropylenzusammensetzung nach einem der vorhergehenden Ansprüche, bei der das zweite Polypropylen eine MFR (230°C/2,16 kg) (Schmelzflussrate) innerhalb eines Bereichs von 50 g/10 min bis 1000 g/10 min aufweist.

6. Polypropylenzusammensetzung nach einem der vorhergehenden Ansprüche mit einem Biegemodul (ASTM D 790 A) größer als 1600 MPa.

7. Polypropylenzusammensetzung nach einem der vorhergehenden Ansprüche mit einer Halbwertszeit der Kristallisation ($T_{1/2}$) innerhalb eines Bereichs von 0,5 bis 1,5 Min bei einer MFR von 300 g/min und darüber.

8. Polypropylenzusammensetzung nach einem der vorhergehenden Ansprüche, die des Weiteren eine weitere polymere Komponente ausgewählt aus der Gruppe bestehend aus Ethylen-Propylen-Elastomer, Plastomer auf Ethylenbasis, Elastomer auf Propylenbasis, schlagzähen Copolymeren auf Propylenbasis und Kombinationen davon umfasst.

9. Automobilkomponente, die die Polypropylenzusammensetzung nach einem der vorhergehenden Ansprüche umfasst.

10. Thermogeformte, spritzgegossene oder blasgeformte Komponente, die geschäumt oder nicht-geschäumt ist, welche die Polypropylenzusammensetzung nach einem der vorhergehenden Ansprüche umfasst.

11. Verfahren zum Schmelzextrudieren oder Coproduzieren von Polymeren auf Propylenbasis zur Bildung der Polypropylenzusammensetzung nach einem der vorhergehenden Ansprüche, bei dem

(a) mindestens erstes Polypropylen mit einer MFR (230°C/2,16 kg) innerhalb eines Bereichs von 0,10 bis 50 g/10 min bereitgestellt wird,
(b) zweites Polypropylen mit einer MFR (230°C/2,16 kg) innerhalb eines Bereichs von 50 bis 1000 g/10 min mit mindestens dem ersten Polypropylen kombiniert wird und die Zusammensetzung schmelzgemischt wird, um ein Schmelzgemisch zu bilden,

i. wobei das Gewichtsverhältnis von erstem Polypropylen zu dem zweiten Polypropylen ("Aufteilung") in einem Bereich von 95:5 Gew.% bis 50:50 Gew.% liegt, und
ii. wobei der Unterschied in der MFR (230°C/2,16 kg) des ersten Polypropylens und des zweiten Polypropylens ("Spanne") innerhalb eines Bereichs von 50 bis 850 g/10 min liegt,

(c) die Aufteilung, die Spanne oder beide verändert werden, um die Scherviskosität des ersten und zweiten Polypropylens in der Schmelze anzupassen, wobei die Scherviskosität bei 10 $s^{-1}$ unabhängig mit einer abnehmenden Aufteilung oder abnehmenden Spanne abnimmt, und
(d) die Polypropylenzusammensetzung isoliert wird.

12. Verfahren nach Anspruch 11, **dadurch gekennzeichnet, dass** die Scherviskosität des Schmelzgemisches bei 10 $s^{-1}$ von einem Bereich von 350 bis 250 Pa·s auf einen Bereich von 100 bis 200 Pa·s abnimmt, wenn die kombinierte Menge des zweiten Polypropylens von einem Gewichtsverhältnis von 80:20 Gew.% auf 60:40 Gew.% erhöht wird.

13. Verfahren nach Anspruch 11, bei dem die MFR (230°C/2,16 kg) der Polypropylenzusammensetzung innerhalb eines Bereichs von 30 g/10 min bis 120 g/10 min liegt.

14. Verfahren nach Anspruch 11, das des Weiteren Thermoformen, Spritzgießen oder Blasformen der Polypropylenzusammensetzung umfasst, um Gegenstände zu bilden.

15. Verfahren nach Anspruch 14, das des Weiteren Schäumen der Polypropylenzusammensetzung umfasst, um geschäumte Gegenstände zu bilden.

**Revendications**

1. Composition de polypropylène comprenant au moins deux polymères à base de propylène, comprenant :

un premier polypropylène ayant un poids moléculaire moyen en poids (Mw) supérieur ou égal à 150 000 g/mole, un MWD dans la plage de 2,5 à 5,5, et une température de point de fusion $Tm_2$ supérieure à 150 °C ; et
un deuxième polypropylène ayant un poids moléculaire moyen en poids (Mw) inférieur à 150 000 g/mole, un MWD dans la plage de 2,5 à 5,5, et un $Tm_2$ supérieur à 150 °C, dans laquelle
le rapport en poids du premier polypropylène au deuxième polypropylène (« fractionnement ») est dans une plage de 95:5 % en poids à 50:50 % en poids,
la différence d'indice de fluidité à chaud (230 °C/2,16 kg) du premier polypropylène et du deuxième polypropylène (« étalement ») est dans une plage de 50 à 850 g/10 min, et

le premier polypropylène et le deuxième polypropylène sont suffisamment miscibles pour conférer une température de transition vitreuse unique et un point de fusion unique au mélange de polymères.

2. Composition de polypropylène selon la revendication 1, dans laquelle le deuxième polypropylène a une valeur de chaleur de fusion (deuxième fusion) $\Delta H_{f2}$ dans la plage de 80 J/g à 135 J/g.

3. Composition de polypropylène selon les revendications 1 ou 2, dans laquelle le deuxième polypropylène a une température de cristallisation Tc dans la plage de 100 °C à 145 °C.

4. Composition de polypropylène selon l'une quelconque des revendications précédentes, dans laquelle le deuxième polypropylène a une chaleur de cristallisation $\Delta$Hc dans la plage de 80 J/g à 135 J/g.

5. Composition de polypropylène selon l'une quelconque des revendications précédentes, dans laquelle le deuxième polypropylène a un indice de fluidité à chaud (230 °C/2,16 kg) dans une plage de 50 g/10 min à 1000 g/10 min.

6. Composition de polypropylène selon l'une quelconque des revendications précédentes, ayant un module de flexion (ASTM D790A) supérieur à 1600 MPa.

7. Composition de polypropylène selon l'une quelconque des revendications précédentes, ayant une demi-vie de cristallisation ($T_{1/2}$) dans une plage de 0,5 à 1,5 min à un indice de fluidité à chaud de 300 g/min et plus.

8. Composition de polypropylène selon l'une quelconque des revendications précédentes, comprenant en outre un autre composant polymère choisi dans le groupe constitué d'un élastomère d'éthylène-propylène, plastomère à base d'éthylène, élastomère à base de propylène, des copolymères choc à base de propylène, et des combinaisons de ceux-ci.

9. Composant d'automobile comprenant la composition de polypropylène selon l'une quelconque des revendications précédentes.

10. Composant thermoformé, moulé par injection ou moulé par soufflage, expansé ou non expansé, comprenant la composition de polypropylène selon l'une quelconque des revendications précédentes.

11. Procédé d'extrusion à l'état fondu ou de coproduction de polymères à base de propylène pour former la composition de polypropylène selon l'une quelconque des revendications précédentes comprenant :

(a) la fourniture d'au moins un premier polypropylène ayant un indice de fluidité à chaud (230 °C/2,16 kg) dans une plage de 0,10 à 50 g/10 min ;
(b) la combinaison d'un deuxième polypropylène ayant un indice de fluidité à chaud (230 °C/2,16 kg) dans une plage de 50 à 1000 g/10 min avec au moins le premier polypropylène et le mélange à l'état fondu de la composition pour former un mélange en fusion ;

i. dans lequel le rapport en poids du premier polypropylène au deuxième polypropylène (« fractionnement ») est dans une plage de 95:5 % en poids à 50:50 % en poids ; et
ii. dans lequel la différence d'indice de fluidité à chaud (230 °C/2,16 kg) du premier polypropylène et du deuxième polypropylène (« étalement ») est dans une plage de 50 à 850 g/10 min ;

(c) la modification du fractionnement, de l'étalement ou des deux pour ajuster la viscosité de cisaillement des premier et deuxième polypropylènes dans la matière fondue, où la viscosité de cisaillement à 10 $s^{-1}$ diminue indépendamment avec un fractionnement décroissant ou un étalement décroissant ; et
(d) l'isolement de la composition de polypropylène.

12. Procédé selon la revendication 11, **caractérisé en ce que** la viscosité de cisaillement à 10 $s^{-1}$ diminue d'une plage de 350 à 250 Pa·s à une plage de 100 à 200 Pa·s lorsque la quantité de deuxième polypropylène combinée est augmentée d'un rapport en poids de 80:20 % en poids à 60:40 % en poids.

13. Procédé selon la revendication 11, dans lequel l'indice de fluidité à chaud (230 °C/2,16 kg) de la composition de polypropylène est dans une plage de 30 g/10 min à 120 g/10 min.

**14.** Procédé selon la revendication 11, comprenant en outre le thermoformage, le moulage par injection ou le moulage par soufflage de la composition de polypropylène pour former des articles.

**15.** Procédé selon la revendication 14, comprenant en outre l'expansion de la composition de polypropylène pour former des articles expansés.

## 20 wt% Second iPP, Rabinowitsch Corrected

FIG. 1

40 wt% Second iPP, Rabinowitsch Corrected

FIG. 2

FIG. 3

## Stiffness-Tm

FIG. 4A

## Stiffness-PDI

FIG. 4B

FIG. 5

## Uni vs. Bimodal

## FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6350828 B

### Non-patent literature cited in the description

- **A. ELMOUMNI et al.** Isotactic Poly(propylene) Crystallization: Role of Small Fractions of High or Low Molecular Weight Polymer. *206 MACROMOL. CHEM. PHYS,* 2005, 125-134
- **M. SEKI et al.** Shear-Mediated Crystallization of Isotactic Polypropylene: The Role of Long Chain-Long Chain Overlap. *MACROMOLECULES,* 2002, vol. 35, 2583-2594
- **W. MINOSHIMA et al.** Experimental Investigations of the Influence of Molecular Weight Distribution on the Rheological Properties of Polypropylene Melts. *POLY. ENG. & SCI.,* 1980, vol. 20 (17), 1166
- **B. RABINOWITSCH.** *Z. PHYSIK. CHEM.,* 1929, vol. 145A, 1